Europäisches Patentamt

European Patent Office

Office européen des brevets

(11) Publication number: **0 162 714**
**A2**

# (12) EUROPEAN PATENT APPLICATION

(21) Application number: **85303615.0**

(22) Date of filing: **22.05.85**

(51) Int. Cl.⁴: **H 03 M 13/12**

(30) Priority: **25.05.84 GB 8413506**

(43) Date of publication of application:
**27.11.85 Bulletin 85/48**

(84) Designated Contracting States:
**DE FR GB IT NL**

(71) Applicant: **NATIONAL RESEARCH DEVELOPMENT
CORPORATION**
**101 Newington Causeway**
**London SE1 6BU(GB)**

(72) Inventor: **Clark, Adrian Percy**
**58 Main Street Willoughby on the Wolds**
**Loughborough Leicestershire LE12 6SZ(GB)**

(72) Inventor: **Ip, Shu Fun Alexis**
**6 Berkeley Road**
**Loughborough Leicestershire LE11 3SJ(GB)**

(74) Representative: **Hasler, Christopher et al,**
**Patent Department National Research Development
Corporation 101 Newington Causeway**
**London SE1 6BU(GB)**

(54) **Coding baseband signals**

(57) It is known that the tolerance to noise of data transmission systems carrying digital signals can be improved by coding the signals before transmission. The present invention provides a further improvement by using a correlative-level code and non- linearly transforming the coded signals to reduce the range of possible values. Correlative-level coding may be carried out using a linear feedforward transversal filter 16 and an adder 17, and a modulo-m network 20 (where m need not be an integer) may be used for non-linear transformation. Additionally a subtractor 14 and a modulo-4 network 15 may be provided for precoding, while the range of signals by the use of subtractor 18 and a multiplier 19. By employing orthogonal signals detection may be simplified.

Fig 2

EP 0 162 714 A2

126689

CODING BASEBAND SIGNALS

The present invention relates to a technique for coding a digital signal for a data transmission system, and finds particular application in modems.

In this specification the terms data symbol and signal element refer to an item of information and the signal or signals carrying that item, respectively. Each signal element is the waveform or sequence of samples that carry or are dependent on the corresponding data symbol. Signal coding refers to coding the data symbols.

By appropriately coding a baseband signal with or without subsequent modulation in a digital data transmission system or else by combining a process of signal coding with the modulation of the signal, a useful improvement in tolerance to additive white Gaussian noise can, as is known, be achieved over more conventional uncoded systems, with gains of up to some 6 dB in tolerance to noise at the higher signal/noise ratios. Convolutional codes (or their equivalent) are normally used for this purpose to give a "trellis-coded" modulation system, which is such that the maximum likelihood detection process for the received signal can be achieved by means of a Viterbi-algorithm detector. Redundant data introduced by the convolutional code are carried by additional possible values of the transmitted data-symbols, such that the data-symbol rate is not changed, rather than lengthening the group of signals forming a signal element. Since each transmitted signal-element carries one data symbol, neither the signal-element rate nor the signal bandwidth are changed as a result of the coding process.

It is an object of the present invention to make further improvements in the tolerance to additive white Gaussian noise of data transmission systems of the type mentioned above.

According to the first aspect of the present invention there is provided apparatus for coding digital signals comprising

means for effectively coding digital signals using a correlative-level code and

means for effectively non-linearly transforming the coded signals to reduce the range of possible values of the coded signals,

the apparatus being such that in the presence of noise, signals generated can be detected with an improved signal to noise ratio in comparison with uncoded signals.

A correlative-level code is one in which a code symbol is some predetermined linear combination of the n most recent data symbols, at the time when the code symbol is generated.

The means for correlative-level coding may comprise a linear feedforward transversal filter and the means for non-linearly transforming the coded signals may carry out a modulo operation in which output signals $q_i$ have the following relationship with the correlative-level signals $p_i$

$$q_i = (p_i + m/2)\text{mod-}m - m/2$$

The function $x$ mod-m is such that

$$x \text{ mod-}m = x + nm$$

where $m$ need not be an integer and $n$ is the appropriate positive or negative integer such that

$$0 \leqslant x \text{ mod-}m < m$$

This means that

$$-m/2 \leqslant q_i < m/2$$

In accordance with the invention the range from $-m/2$ to $m/2$ is made smaller than the range of possible values of $p_i$.

Preferably the mean of the possible values of the correlative-level coded signals is subtracted from these signals and the resulting values multiplied by a constant before application to the means carrying out the modulo operation in order to give a range of values which is centred on zero and is therefore suitable for transmission from a modem. The constant is chosen to give the required transmitted power level.

Simulation of a coding system according to the invention and as described above has shown an improvement of about 1 to 3 dB at a bit error rate of 1 in $10^4$ over a system in which no coding is used.

A further improvement in noise tolerance can, it is believed, often be achieved by precoding the data signals before correlative coding. Precoding means may therefore be added, for example, to subtract the output of the linear feedforward transversal filter from the uncoded signal elements using modulo arithmetic where again the range of signal values after precoding is smaller than before. At error rates of 1 in $10^4$ a further improvement of up to about 1 dB is forecast when suitable precoding is employed. Where precoding is used an inverse process is required in the receiver detector.

In known systems of the type mentioned above and in the invention, the received signal elements overlap in time and as a result, in general, a Viterbi algorithm detector is required at the receiver in order to achieve the whole of the available tolerance to noise. Considerable equipment complexity results, particularly where high gains in tolerance to noise are achieved. To avoid the use of a Viterbi detector when overlapping signal elements occur, the elements may, as is known, be "orthogonal" (as explained below) and then the overlapping signals can be detected at the receiver using a detector comprising a matched filter and a threshold-level detector. Unfortunately in the known systems mentioned exactly the same tolerance to noise is obtained as in the corresponding system where the signal elements do not overlap in time. Using orthogonal signal elements is therefore more complex and is without any useful advantage.

However, by using orthogonal signals in the present invention to represent respective signal elements it is thought that simplified detectors can be used, if in addition the orthogonal signals are based on integer coefficients and the signal elements and the quantity m are also integers. It can then be shown from the theory of numbers that the resultant signal elements at the end of coding are orthogonal in the sense that if the detector includes a suitable linear filter followed by a non-linear network which corresponds to that in the transmitter, inter symbol interference at the output of the detector is, in theory, eliminated. A linear matched filter in such an arrangement is, unlike the similar situation where no non-linear network is used, not matched to the transmitted signal elements. However it is believed that a simplified form of additional detector at the output of the receiver linear filter, such as a reduced-state Viterbi-algorithm detector, will lead to a cost effective detection process.

Alternatively, as a result of the orthogonality of the different received signal elements, an appropriate reduced-state Viterbi-algorithm detector operating in the absence of the matched-filter should have much shorter error bursts in the detected signal than is normal for such a detector and it should thereby be capable of achieving a good tolerance to noise without involving complex equipment.

The orthogonal codes can be provided by the means for non-linearly transforming the coded signals using the above mentioned linear feedforward transversal filter with appropriate coefficients.

A problem with orthogonal codes is that they require a large number of different signal values if they are to be most effective. However, by operating at the transmitter with signals (samples) that are represented as binary-coded numbers with, say, 4 to 16 bits (thus providing the required number of signal values), the resulting signal $q_i$, at the output of the non-linear network may be fed directly to a digital to analogue converter designed to operate with the appropriate number of bits (4 to 16). Provided that the appropriate analogue filtering is applied at the transmitter output and receiver input and provided that a suitably accurate AGC circuit is used at the receiver, it is possible to use an analogue-to-digital converter at the receiver operating with the same number of bits per sample as the digital-to-analogue converter at the transmitter and such that the signal $q_i$ fed to the digital-to-analogue converter at the transmitter in the absence of noise gives the signal $q_i$ at the appropriate sampling instant at the output of the analogue-to-digital converter at the receiver. In other words, the numbers of possible signal values at the receiver is limited to the range of integer values covered by the possible values of $q_i$ and the receiver is then optimised to operate with these values. This avoids the quantisation errors that are otherwise introduced by the analogue-to-digital converter at the receiver and leads to the most efficient design for the given number of possible values, the receiver operating entirely with the given set of integer values, all processess being carried out modulo-m.

Both the correlative-level coding means and the means for non-linear transformation may be formed by a single electrical store holding a look-up table containing coded outputs corresponding to uncoded inputs. The store preferably, in effect, also comprises precoding means and means for carrying out subtraction of the mean and multiplication by two.

According to a second aspect of the present invention there is provided a method for coding digital signals comprising

coding the signals using a correlative-level code, and

non-linearly transforming the coded signals to reduce the range of possible values thereof,

the method being such that in the presence of noise the signals generated can be detected with an improved signal to noise ratio in comparison with uncoded signals.

Certain embodiments of the invention will now be described by way of example with reference to the accompanying drawings, in which:-

Figure 1 is a block diagram of a data transmission system employing coding apparatus according to the invention,

Figure 2 is a block diagram of coding apparatus according to the invention,

Figure 3 is a block diagram of a linear feedforward transversal filter used in the apparatus of Figure 2, and

Figures 4 and 5 illustrate noise improvements expected using first and second coding vectors in the apparatus of Figure 2.

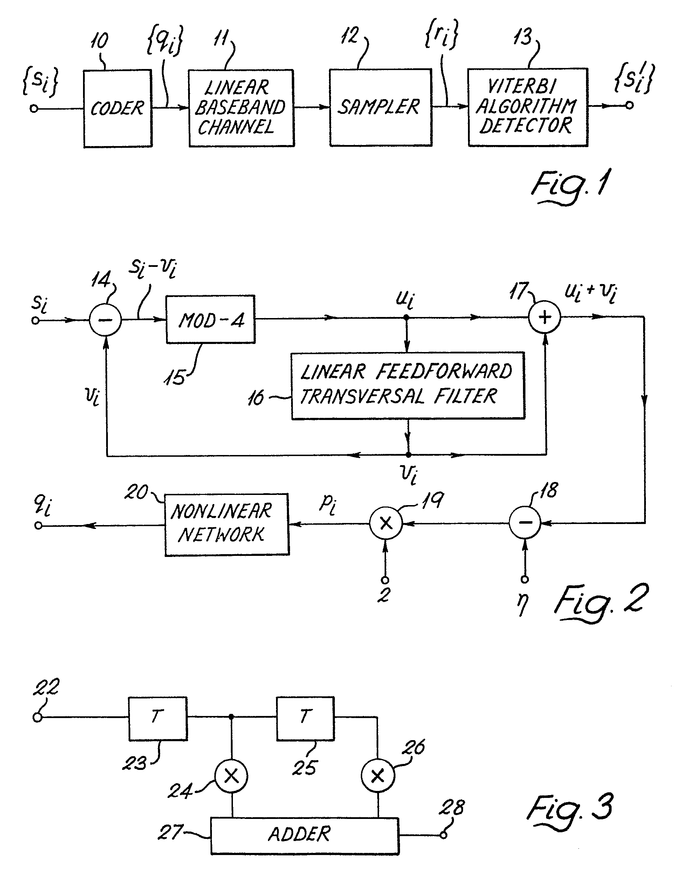

In Figure 1, a binary sequence to be transmitted is applied to a converter (not shown) for Gray code conversion into a sequence of quaternary data-symbols $(s_i)$ where

$$s_i = 0, 1, 2 \text{ or } 3 \qquad (1)$$

The symbols $(s_i)$ are statistically independent and equally likely to have any of their possible values. The symbols $s_i$ are applied to a coder 10 and each resultant coded and transmitted symbol $q_i$

- 6 -

is a function of $s_i$ and of one or more of the data-symbols $s_{i-1}$, $s_{i-2}$, $s_{i-3}$, .... . The signals shown in Figure 1 are those occurring at time t = iT.

The symbols of $q_i$ are transmitted over a linear baseband channel 11 which may include linear modulation and demodulation processes together with a bandpass transmission path to a sampler 12 at the channel output which gives an output signal for each data-symbol $s_i$. The channel is equalised so that it introduces no appreciable distortion or attenuation, the delay being corrected by appropriately phasing the sampler in the receiver, and its output signal, at time t = iT, is

$$r_i = q_i + w_i \tag{2}$$

where noise samples $(w_i)$ are statistically independent Gaussian random variables with zero mean and variance $\sigma^2$. A Viterbi-algorithm detector 13 operates on the received samples $(r_i)$ to give detected data-symbols $(s_i)$, the detection process being maximum-likelihood. The $(s_i)$ are then decoded from Gray code to give a detected binary sequence at the output of the receiver, which, in the absence of noise, would be the same as the binary sequence fed to the transmitter.

The coder 10 may be as shown in Figure 2. The data-symbols $(s_i)$ are "precoded" by means of a subtractor 14 and a modulo 4 circuit 15 to form symbols $(u_i)$ and the latter are "correlative-level coded" by means of a linear feedforward transversal filter 16 and an adder 17 to form the symbols $(p_i)$, which are processed non-linearly to give the $(q_i)$.

It can be seen that

$$u_i = (s_i - v_i) \bmod{-4} \tag{3}$$

where $v_i$ and hence $s_i - v_i$ are integers. Thus, $u_i$ is the remainder of $s_i - v_i$ upon division of 4, so that

$$u_i = 0, 1, 2 \text{ or } 3 \tag{4}$$

If the linear feedforward transversal filter has g taps with gains $(y_h)$, its output signal, at time t = iT, is

$$v_i = \sum_{h=1}^{g} u_{i-h} y_h \tag{5}$$

where the $(y_h)$ are positive or negative integers (or zero) forming the coefficients of the filter 16 and have values forming the last g components of a coding-vector

$$Y = [y_0 \quad y_1 \quad \cdot \quad \cdot \quad \cdot \quad y_g] \tag{6}$$

Although it is preferable that $y_o = 1$ in Y, the remaining coefficients of Y need not be integers and they may, in general, be complex valued.

In order to provide symbols $(p_i)$ which have a range extending equally positive and negative and as such are more suitable for transmission a quantity $\eta$ which is the mean or expected value of possible $u_i + v_i$ is subtracted from $u_i + v_i$ using a subtractor 18. Thus $p_i$ has zero mean, and after multiplication by a constant in a multiplier 19 the possible values of $p_i$ are those which ultimately give a required power level for the symbols $q_i$ when transmitted over the channel 11. In the example shown the constant is two.

A non-linear network 20 operates on the signal $p_i$ to give at its output the signal

$$q_i = (p_i + m/2) \text{ mod-m } m/2$$

$$= p_i + nm \tag{7}$$

where m need not be an integer and n is the appropriate integer such that

$$- m/2 \leqslant q_i < m/2 \tag{8}$$

The value of m is chosen to be smaller than the range of values of $p_i$ so that the values of $p_i$ are compressed into the range: $-m/2$ to $m/2$ and although the "distance" between codes may be reduced noise tolerance in the overall system is found to be improved due to the greater reduction in transmitted signal level.

The use of a modulo network such as the modulo 4 network 15 has been discussed by A.P. Clark and M.N. Serinken in "Non-Linear Equalisers Using Modulo Arithmetic", Proc. IEE, 1976, 123, No. 1, pages 32 to 38, where other suitable forms of non-linear network are mentioned.

A correlative-level code is one in which a code symbol is some predetermined linear combination of the n most recent data symbols, at the time when the code symbol is generated, where n is the constraint length of the code. The constraint length of a code is one plus the memory of the code, the memory being the quantity g mentioned above. Correlative coding as carried out by the filter 16 is described in the book "Principles of Data Transmission", Second Edition, by A.P. Clark, Pentech Press, 1983 (see page 238). Two coding vectors for the filter 16 which have been found to be effective are

$$[1 \quad 1], \quad \text{and}$$
$$[1 \quad 2 \quad 1]$$

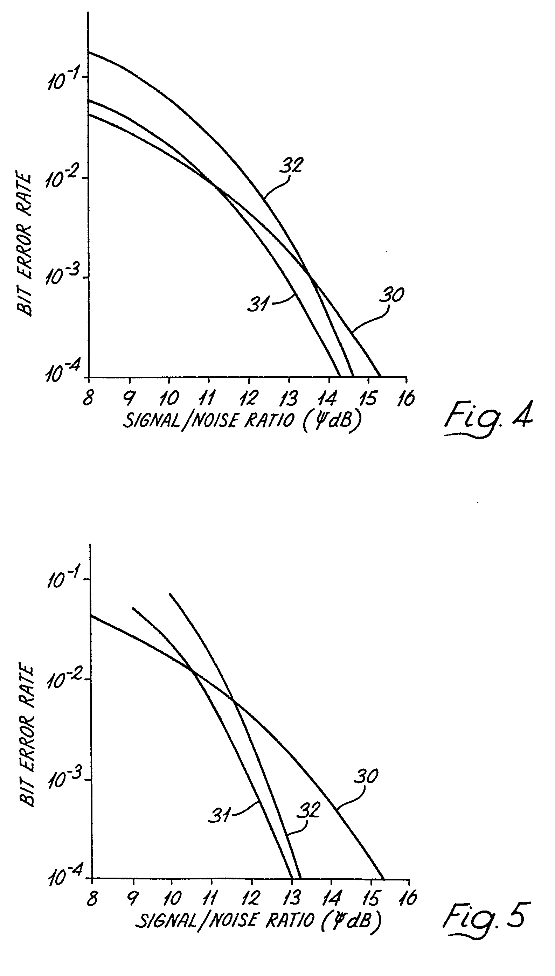

A suitable form for the filter 16 is shown in Figure 3. Input signals are applied to a terminal 22 and pass through a delay 23 of duration T equal to the sampling interval of the system. Output signals from the delay 23 pass to a multiplier 24 where multiplication is carried out by, in this instance, a coefficient 2. Signals from the delay 23 pass to a further delay 25 also of duration T and then to a multiplier 26 where, in this example, a coefficient of 1 is used. Output signals from the multipliers 24 and 26 are applied to an adder 27 and then to an output terminal 28. The coefficients are easily provided by arranging a shift of one place in binary arithmetic, for the multiplier 24, and no change for the multiplier 26. Thus in general the filter 16 is easy to implement.

The filter of Figure 3 as described has the second coding vector shown above; the first coefficient 1 in the vector being provided by the addition of the input signal at the terminal 22 to the output signal at the terminal 26 by means of the adder 17 in Figure 1 and the other coefficients of the vector being those of the multipliers 24 and 26. Choice of coefficients for the filter 16 is discussed below but in general an empirical approach to determine which coefficients give maximum noise improvement is used. Larger numbers of coefficients than those mentioned above are expected to provide a further improvement if correctly selected.

A further practical way of designing the coder of Figure 2 is to simulate its operation using a computer in various noise conditions and with various coefficients for the filter 16, values of the modulus of the circuit 15 and values of m in the non-linear network 20. Having found a useful set of values, the computer is used to derive a look-up table for values of $s_i$ which give values of $q_i$. Hence the whole of Figure 2 can be replaced by a read only memory (ROM) containing a suitable look-up table and the resulting coder is extremely simple.

A useful value for m in the non-linear network 20 is 2.6 and when this value is used in conjunction with the coding vectors mentioned the following values of $q_i$ are possible:-

First coding vector gives

$$q_i \quad 0, \ \pm 0.6, \ \pm 0.8, \ \pm 1.2$$

Second coding vector gives

$$q_i \quad 0, \ \pm 0.2, \ \pm 0.4, \ \pm 0.6, \ \pm 0.8, \ \pm 1.0, \ \pm 1.2$$

Figures 4 and 5 illustrate improvements which computer simulation has shown can be expected using the coding system of Figure 2 together with the first set of coefficients and the second set of coefficients, respectively. In Figures 4 and 5 the performance of a comparable uncoded system is shown by the curves 30 while the curves 31 and 32 illustrate the performance of the coding system with, and without, precoding using the modulo 4 network 15, respectively.

As has been mentioned, the detector used at the output of the sampler 12 in Figure 1 can be simplified if the signal elements represented by orthogonal codes or close approximations thereof, for example Huffman codes, and $s_i$, $y_i$ and m are integers. Huffman sequences which may be used are described in the paper by Hunt, J.N and Ackroyd, M.H: "Some Integer Huffman Sequences", IEEE Trans. Information Theory, IT 26, No. 1, pages 105 to 107, January 1980. Other suitable codes are known, some being given by equation 2.4.59 on page 60 of "Advanced Data Transmission System" by A.P. Clark, published by Pentech Press Ltd. in 1977. Since a close approximation to orthogonal coding may be carried out using a transversal feedforward filter, coefficients which generate a close approximation to an orthogonal code may be used in the filter 16.

The larger number of different signal levels which are required for effective orthogonal coding can be binary coded numbers having for example 4 to 16 bits. After coding in the coder 10, the resulting signals are then passed to a digital-to-analogue converter, transmitted by an analogue channel arranged, as nearly as possible in the absence of noise to allow the reproduction of the same digital signals at the output of an analogue-to-digital converter in the receiver. For example, if a modem is designed to operate with 12 bits representing each symbol or sample, then the possible values of any signal can be taken to be an integer in the range −2047 to 2047. All signals, including the $(w_i)$ and the $(r_i)$, are now integers, and the coding together with the detection process may be optimised for the given set of integers used.

From the above specific description of the invention it will be clear that the invention can be put into practice in many other ways, particularly in the form of apparatus used for coding equivalent to Figure 2, the modulus value for the network 15, the value m for the network 20 and the coefficients of the transversal filter 16.

One particular form of modulation which is likely to be used in modems is quadrature amplitude modulation (QAM). The signals $q_i$ produced by the coder 10 are here complex-valued and may then be QAM modulated before being passed to the channel 11 and demodulated before sampling using the sampler 12. Alternatively the real and imaginary parts of $q_i$ can each be supplied to respective circuits according to Figure 2 and then on reception be subject to separate detection before being combined to provide a final output signal.

46G

## CLAIMS

1. Apparatus for coding digital signals comprising
means for effectively coding digital signals using a
correlative-level code characterised by means for effectively
non-linearly transforming the coded signals to reduce the range of
possible values of the coded signals, the apparatus being such
that in the presence of noise, signals generated can be detected
with an improved signal to noise ratio in comparison with uncoded
signals.

2. Apparatus according to Claim 1 characterised in that the
means for correlative-level coding comprises a linear feedforward
transversal filter.

3. Apparatus according to Claim 1 or 2 characterised in that the
means for non-linearly transforming the coded signals is arranged
to carry out a modulo operation in which output signals $q_i$ have
the following relationship with the correlative-level signals $p_i$

$$q_i = (p_i + m/2)\text{mod-}m - m/2,$$

where the function $(p_i + m/2)\text{mod-}m = p_i + m/2 + nm$, m is a
constant, and n is a positive or negative integer such that

$$0 \leqslant (p_i + m/2)\text{mod-}m < m,$$

the range $-m/2$ to $m/2$ being arranged to be smaller than the range
of possible values $p_i$.

4. Apparatus according to any preceding claim characterised in
that the mean of the possible values of the correlative-level
coded signals is subtracted from the correlative-level coded
signals and the result is multiplied by a constant before application to the non-linearly transforming means, the constant being
chosen to provide a predetermined power level at the output of the
apparatus.

5. Apparatus according to any preceding claim characterised by
the inclusion of means for precoding digital signals applied at
the input to the apparatus, the precoding being such that on
detection an improved signal to noise ratio can be achieved.

6. Apparatus according to Claim 5 characterised in that the
precoding comprises subtracting the output of the correlative-
level coding means from the input signals thereto using modulo arithmetic such that the range of signal values after precoding is smaller than before precoding.

7. Apparatus according to any preceding claim characterised in that the correlative-level coding means is arranged to provide substantially orthogonally coded output signals.

8. Apparatus according to any preceding claim characterised in that the means for correlative-level coding and the means for non-linear transformation are formed by an electrical store holding a look-up table containing coded outputs corresponding to uncoded inputs.

9. Apparatus according to Claim 8 insofar as dependent on Claim 4 characterised in that the process carried out by the look-up table includes subtraction of the said mean and multiplication by a constant chosen to provide a predetermined power level at the output of the apparatus.

10. Apparatus according to Claim 8 or 9 insofar as dependent on Claim 5 or 6 characterised in that the process carried out by the look-up table includes precoding.

11. A method for coding digital signals comprising coding the signals using a correlative-level code, characterised by non-linearly transforming the coded signals to reduce the range of possible values thereof, the method being such that in the presence of noise the signals generated can be detected with an improved signal to noise ratio in comparison with uncoded signals.

12. A method according to Claim 11 characterised in that coding using a correlative-level code generates orthogonal signals.

46H

0162714

Fig.1

Fig.2

Fig.3

Fig. 4

Fig. 5